# EUROPEAN PATENT SPECIFICATION

(11) **EP 2 051 882 B1**
(45) Date of publication and mention of the grant of the patent: **29.12.2010**
(21) Application number: 07750361.3
(22) Date of filing: 09.02.2007
(51) Int. Cl.: B60R 22/46, B60R 22/34

(54) **SEAT BELT PRETENSIONER**
SITZGURTVORSPANNER
PRÉ-TENDEUR DE CEINTURE DE SÉCURITÉ

(30) Priority: 31.05.2006 US 421165
(43) Date of publication of application: 29.04.2009
(73) Proprietor: Key Safety Systems, Inc., Sterling Heights, MI 48313 (US)
(72) Inventor: ARNOLD, David R., Macomb, MI 48044 (US); BOELSTLER, Richard A., Lake Orion, MI 48359 (US)
(74) Representative: Gislon, Gabriele
(86) International application number: PCT/US2007/003518
(87) International publication number: WO 2007/139599

(56) References cited:
- WO-A1-03/104050
- US-A- 4 917 210
- US-A- 5 639 120
- US-A- 5 676 397

## Description

The present invention generally relates to seat belt systems and more particularly to a seat belt pretensioner or belt tightener.

Seat belt pretensioners, also called belt tighteners have been used in vehicles for many years. The WO 03/104050 shows for example a pyrotechnically driven piston is forced down a straight tube at the onset of a vehicle crash. The piston is attached to a cable, the other end of which is secured to the seat belt buckle. The buckle in turn is connected to a seat belt tongue, which is attached to the lap belt and shoulder belt of, for example, a 3-point seat belt system. Quite often in buckle pretensioners, a portion of the cable is looped about a pulley or casting that provides a channel and supports the cable and also functions as a direction-changing element for adjacent sections of the cable. The piston moves through a straight tube that is oriented at an acute angle relative to an extending piece of cable connected to the buckle. Pretensioners typically include a housing element or bracket used for mounting the pretensioner to, for example, a portion of the vehicle structure or seat structure. The housing element or bracket also includes an element that aids in positioning the cable/buckle portion of the cable assembly to meet buckle zone requirements as specified by government or industrial standards.

The present invention provides a lightweight, cost effective pretensioner that avoids the use of expensive castings. Accordingly the invention provides a seat belt pretensioner comprising: a straight tube having a cylindrical wall, a first end and a second end, at least one of the first end or the second end being open, the straight tube includes an opening in the wall that receives a curved tube, the curved tube having a first end portion; a second end portion and a curved central segment, the second end portion has a center that is collinear with a central axis of the straight tube extending through the center of the straight tube and an axis extending through the center of the first end portion is arranged at an acute angle relative to the central axis of the straight tube; a pyrotechnic device is located in the straight tube to provide products of combustion to drive a piston along the interior of the straight tube, the motion of the piston moving a cable in a direction to move a seat belt buckle to reduce belt slack about a vehicle occupant.
Figure 1 is an isometric view of a seat belt pretensioner of the present invention.
Figure 2 is a cross-sectional view of the pretensioner in Figure 1.
Figure 3 is a partial exploded view of various components of the pretensioner.
Figures 4 and 4A are partial cross-sectional views showing the interrelationship between various tubular elements of the pretensioner.
Figure 4B shows gas flow in the straight tube.
Figure 5 is a cross-sectional view showing an enlarged view of a portion of the pretensioner.

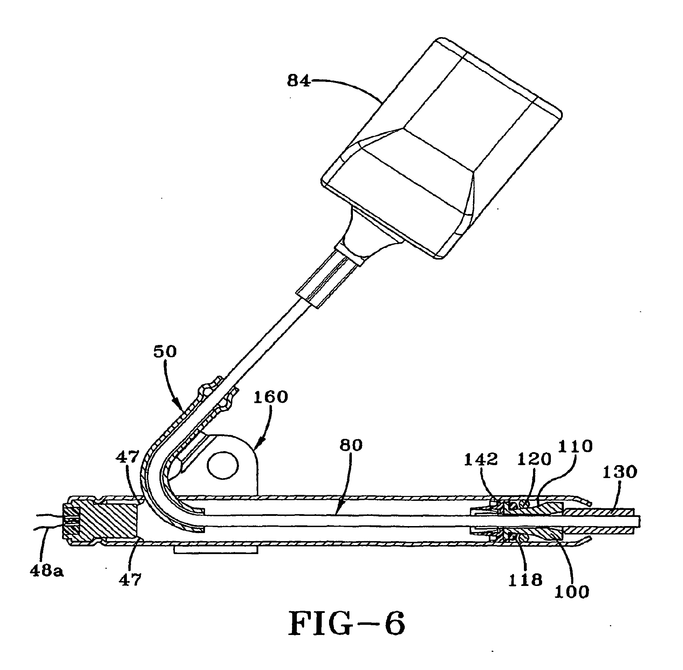

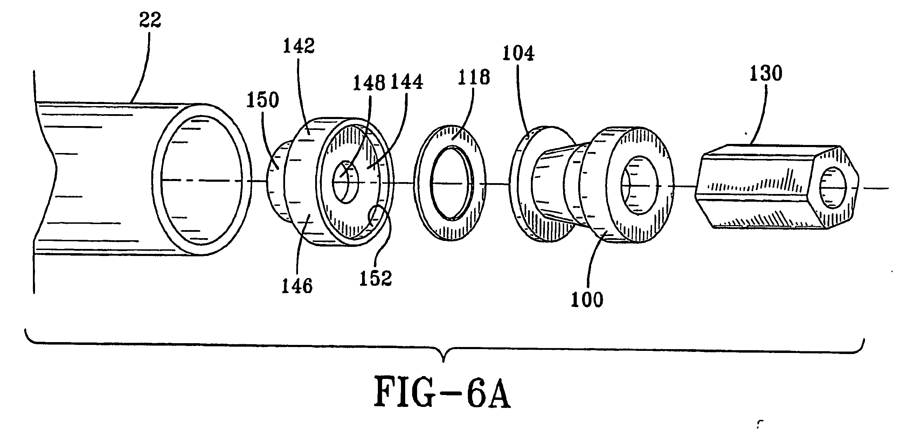

Figure 6 shows the pretensioner in an activated condition.
Figure 6A is a projected view of some of the major components of the pretensioner.

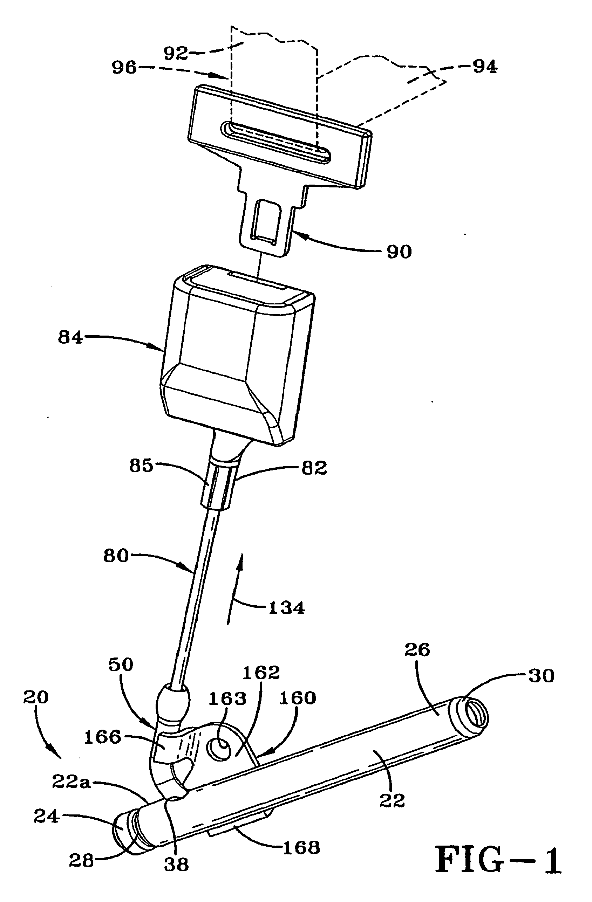

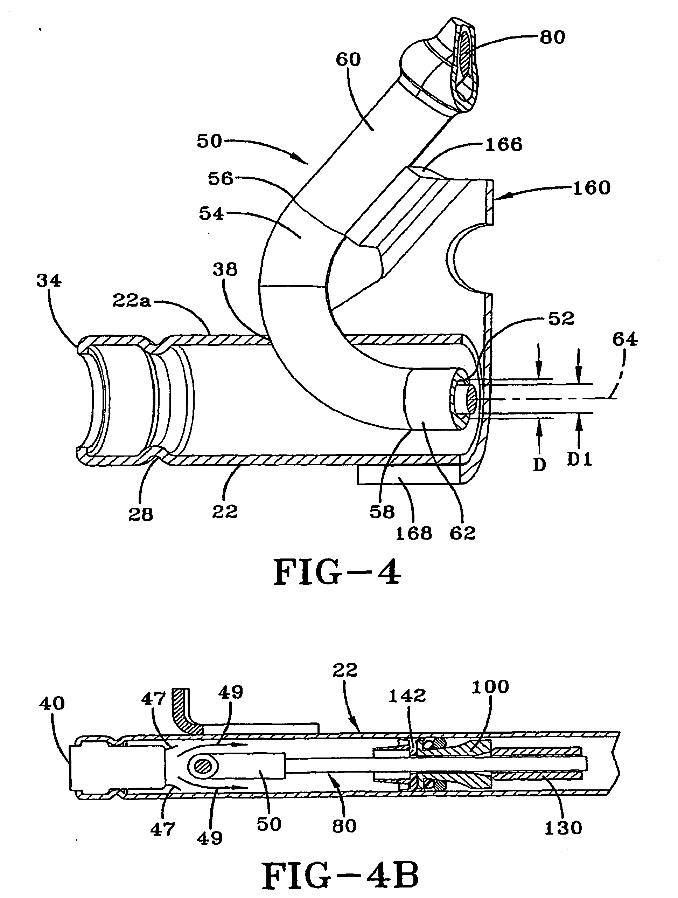

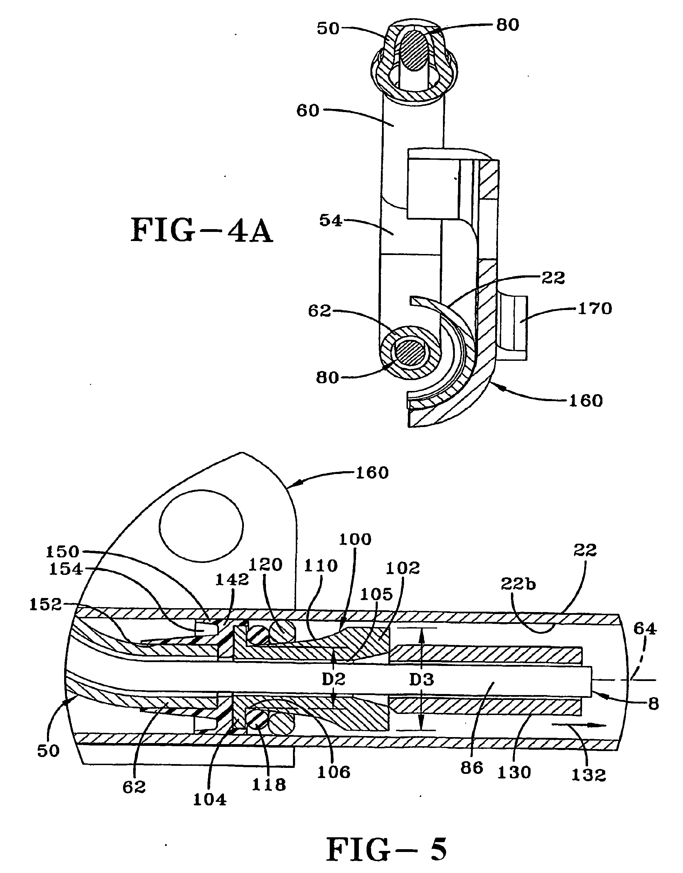

Figures 1 - 4 illustrate the various features of a first embodiment of the present invention. A pretensioner 20 comprises an extruded steel straight tube 22, having a first end 24 and second end 26. The ends 24, 26 of the straight tube 22 are open. During the assembly process, a crimp 28 is made near an end 24 of the straight tube 22 to secure a pyrotechnic device 40 inside the straight tube. The tip of end 26 of straight tube 22 is rolled downwardly 30 to reduce the diameter of the end opening 32 to be less than that of a ferrule 130. The pyrotechnic device 40 is of known construction and is inserted in end 24 of the straight tube 22. The pyrotechnic device may include an enlarged head 41, which is restrained in position by the crimp 28 and by a rolled end 34 of the straight tube 22, as shown in Figure 4. The pyrotechnic device 40 (not shown in Figure 4) comprises a housing 46 filled with pyrotechnic material. The pyrotechnic device 40 includes one or more leads or wires 48a that receive an electrical current from a control unit. Upon activation of the pyrotechnic device, products of combustion produced by the pyrotechnic device 40 exit am open end 45 of the pyrotechnic device, which is located in the vicinity of a region 36 of the straight tube 22. The straight tube 22 has an oval-shaped opening 38 therethrough located on the top 22a of the straight tube 22, as shown in see Figures 1 and 4. The open end 45 of the pyrotechnic device 40 is closed by a foil 47 to protect the pyrotechnic material.

The pretensioner 20 includes a curved tube 50 having an inner wall 52 with a diameter D that is around 1.5 mm greater than the diameter D1 of a metal cable or wire rope 80 that extends through the curved tube 50. The difference in diameter permits the curved tube 50 to be bent and to receive a bent section of cable. The curved tube 50 includes a central segment 54, which in the illustrated embodiment is of a constant curvature. In general a constant curvature is not needed provided the curved tube has a smooth transition such as achieved using two or more curves tangent to one another. The central section 54 begins at region or point 56 and extends to point or region 58 of the curved tube 50. As shown the central segment is configured to have an arcuate curvature. The curved tube includes an extending portion 60 that is oriented generally tangentially to the curved portion and provides a circular-to-straight transition region through which the cable 80 extends. The curved tube 50 includes another curved-to-straight transition segment 62.

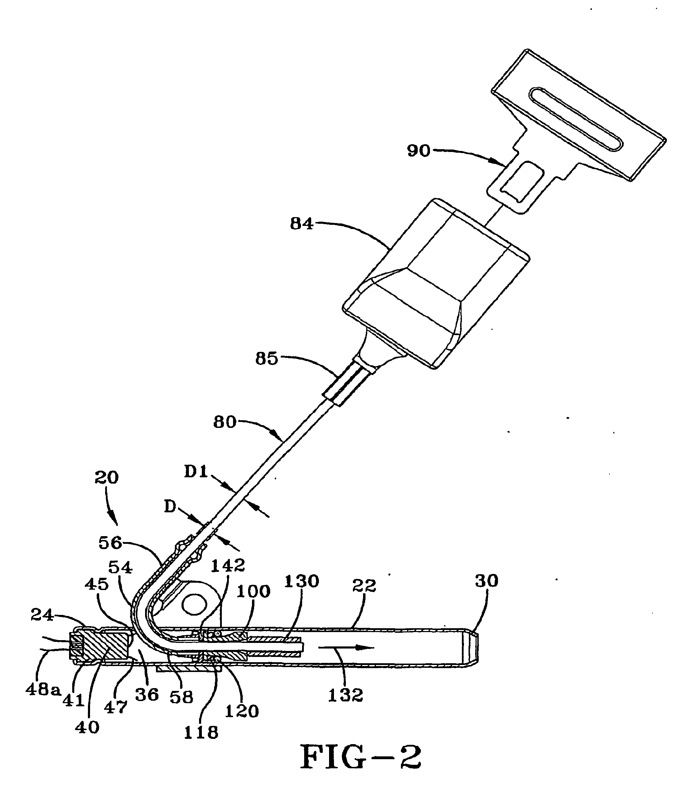

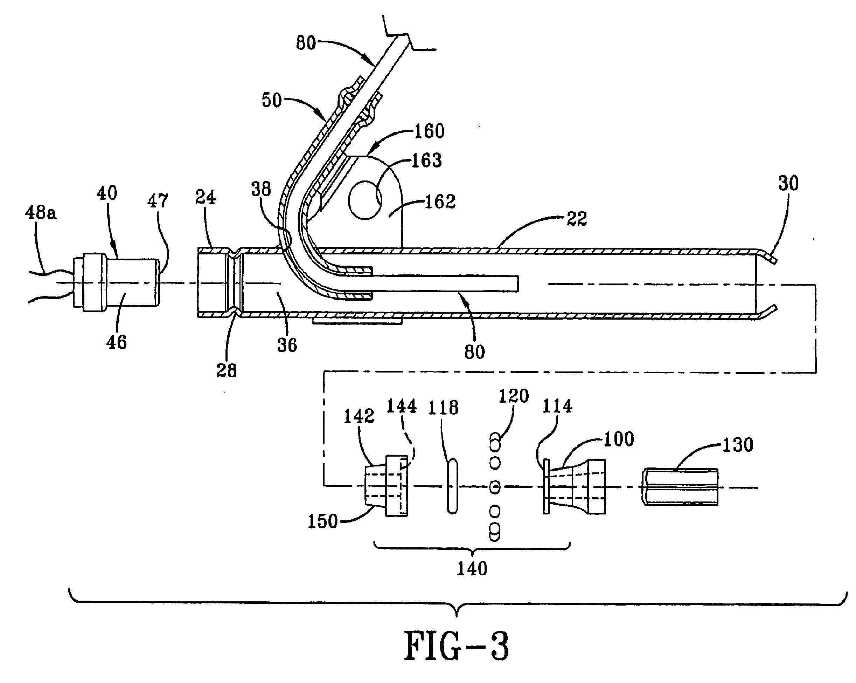

During assembly the curved tube 50 is placed within opening 38 of the straight tube 22. The curved tube 50 is manipulated such that the straight segment 62 is co-linear to a central, longitudinal axis 64 of the straight tube 22. In this configuration the center of the curved-to-straight transition 62 of the curved tube 50 is co-linear with the center of the straight tube 22. This relationship can also be seen in Figures 4 and 4A. In Figures 2 and 3 the curved tube 50 is spaced from the pyrotechnic device 40. A space between the pyrotechnic device and the curved tube that functions as a cable guide allows the foil seal of the pyrotechnic device unrestricted movement to open, which should encourage linear flow about the lower portions of the curved tube 50 as indicated by the arrows 49 in Figure 4B as the products of combustion flow through the straight tube. It should be noted that in Figures 4 and 4A the piston, cable ferrule and cable have been eliminated to more clearly illustrate the orientation of the curved tube 50 within the straight tube 22.

In Figure 4A, the sections 54, 60 of the curved tube 50 are oriented generally perpendicularly to the top surface 22a of the straight tube 22. During assembly, a cable 80 is threaded through the curved tube 50. As best shown in Fig. 1, one end 82 of the cable 80 is connected either directly to a seat belt buckle 84 of the type used in pretensioner operation or indirectly through a ferrule 85 that is connectable to the buckle 84. Figure 1 schematically illustrates a seat belt tongue 90 about to be secured in a locking relation with the buckle 84. Also schematically illustrated is a portion of a shoulder belt 92 and a lap belt 94 of a seat belt system 96, which are secured or connected to the tongue 90 in one of the many ways known in the art. The cable 80 includes an opposite end 86 fixed to a movable piston 100. The piston 100 is shown received about and end 86 of the cable. A cable terminating element, such as a ferrule 130, is slipped about the end 86 of cable 80 and crimped, thereby providing a mechanical connection between the ferrule 130 and the cable 80.

The piston 100 includes a forward cylindrically shaped portion 102 and a rearward cylindrically shaped portion 104 as shown in Figure 5. The forward and rearward portions 102, 104 of the piston an engage inner wall 22b of the straight tube 22 in a sliding manner, maintaining the alignment of piston 100 to a longitudinal axis 64 of the straight tube as the piston moves within the straight tube. The piston 100 has a central bore 105 to receive the cable 80. The forward and rearward portions 102, 104 of the piston cooperate to form a V-shaped groove, recess or restriction 106. A resilient member 118, such as a rubber O-ring or spongy material is received within the V-shaped groove, recess or restriction 106 and resiliently supports a plurality of ball bearings 120. The piston 100 further includes a funnel-shaped surface 110, which transitions from a smaller diameter region D2 to a larger diameter region D3. The larger diameter D3 approaches the size of the inner diameter of the straight tube 22.

Located between the piston 100 and the end of the curved-to-straight transition segment 62 of the curved tube 50 is a movable flexible seal 142 typically made of an elastomer with a high temperature resistance or rating. The seal 142 seals the tubes in a manner similar to a wad or sabot used in firearms. The piston 100 and the seal 142 act as a piston assembly 140 as the end 104 fits into a recess 144 of the seal 142, and the seal 142 and the piston 100 move together. The seal 142 also includes a body 146 having a center bore 148. The top of the body 146 includes a lip that forms a recess 144. The opposite end of the body is configured as two sliding or lip seals, a first sealing against the inner diameter of the straight tube 22 and the second sealing against the outer diameter of the curved tube 50, more particularly the curved-to-straight transition segment 62. The opposite end of the body 146 includes a tapered outer, flexible cylindrical wall 150. The flexible cylindrical wall 150 tapers outwardly so that its thinnest portion is at one end. The opposite end of the body 146 includes a flexible, cylindrical inner wall 152, concentric to the flexible cylindrical wall 150. The cylindrical inner wall 152 tapers inwardly so that its thinnest portion is at an end. The inner diameter of the cylindrical inner wall 152 forms a fluid-tight seal about the curved-to-straight transition segment 62 of the curved tube 50. The two walls 150, 152 form a tapered cylindrical cavity 154. During assembly the seal 142 is placed about the end of the curved-to-straight transition segment 62 of the curved tube 50, with an end 104 of the piston 100 received within the recess 144.

Figures 2 and 5 show the positioning of the various parts of pretensioner 20 prior to activation. In this configuration, an end surface 114 of the piston 100 is received in the recess 144. The sealing member 142 is positioned adjacent and about the curved-to-straight transition segment 62 of the curved tube 50. Each of the ball bearings 120 is loosely received within the straight tube and about the narrow diameter portion 112 of the piston and adjacent the O-ring 118.

During activation of the pyrotechnic device 40, products of combustion are produced, which enter a region 36 of the straight tube 22. Thereafter the products of combustion flow through the straight tube 22 and along the exterior wall of the curved tube 50 and around the curved-to-straight transition segment 62 of the curved tube 50, as well as about the central portion 54 of the curved tube 50. The products of combustion are received in the tapered cylindrical cavity 154 and push the lip, seal or wall 150 against the inner diameter of the straight tube 22 forming a seal between them and urge the lip, seal or wall 152 against the outer diameter of the curved tube 50 forming another seal between them. The products of combustion, which include gas at an elevated pressure, urge the sealing member 142, piston 100, O-ring 118 and ball bearings 120 rapidly down the straight tube 22 in the direction of arrow 132. The moving piston pushes against ferrule 130 causing the ferrule, as well as cable end 86, to rapidly move down the straight tube 22. Movement of end 86 of the cable causes cable 80 to be drawn through the curved tube 50, thereby moving the seat belt buckle 84 in the direction of arrow 132, which as mentioned above will tend to remove slack and tighten the seat belt system about the vehicle occupant. While the seal 142 remains in engagement with the curved tube 50 it will prevent gas leakage through the curved tube 50. The seal 142 will disengage from the curved tube 50 as the pretensioning progresses. The seal 142, piston 100, O-ring 118, ball bearings 120 and ferrule 130, in response to the products of combustion, are repositioned by about 100mm closer to the end 26 of the straight tube 22 in about 10 milliseconds after activation of the pyrotechnic device 40.

In one embodiment of the invention the diameter of the piston is greater than the reduced diameter of the end 30 of the straight tube 22 and the diameter of the ferrule 130 may be greater than that of the end 30 of the straight tube 22. If the ferrule impacts the end 30 of the straight tube 22 it will deform the straight tube. This impact slows the movement of the cable 80, as well as buckle 84 and other parts connected to the cable, as energy is expended to deform the straight tube 22. Further, if there is a large amount of the slack in the seat belt system it is possible that piston 100 will continue to move and contact the end 30 of the straight tube, which may have been somewhat enlarged if it was contacted by the ferrule. In this manner more energy is absorbed to decelerate the movement of the piston and ferrule and cable.

As the crash proceeds the vehicle occupant protected by the seat belt system and pretensioner, will tend to move forward, loading the shoulder belt 92 and lap belt 94. This loading will tend to pull the buckle 84 and cable 80 in a direction shown by the arrow 134, which is generally opposite to the direction of arrow 132. If unchecked the forces applied to the cable by the vehicle occupant could pull the piston toward its start position and reintroduce slack. To prevent the cable from moving and thereby reintroducing slack about the vehicle occupant, the piston is configured with a one-way locking device in the form of a surface 110 and the ball bearings 120. Such locking devices have been used in the prior art. As the buckle moves outwardly toward its original position, the relative position of the ball bearings 120 changes in that the ball bearings roll up the ramped surface 110 of the piston 100 and become trapped between the surface 110 of the piston 100 and the inner wall 22b of the straight tube 22 to provide a mechanical lock against the piston 100. This type of one-way locking device can be configured to hold the piston in place during and in response to forces generated during a crash, or alternatively, permit the piston to controllably move in a direction opposite to arrow 132.

The pretensioner 20 further includes a mounting member 160 such as a housing or bracket, which serves to mount the pretensioner to a vehicle or seat structure. The mounting member 160 includes a plate portion 162 having a mounting hole 163 therein for receipt of a mounting fastener (not shown) to fasten the member 160 to the vehicle or seat. The plate portion 162 includes a top and lower curved portions or tabs 166, 168, which are respectively secured such as by welding or brazing to the curved and straight tubes 50, 22. The tabs 166, 168 prevent movement of the curved tube 50. The plate portion 162 includes another tab 170 that is bent oppositely from tabs 166, 168 to extend outwardly from the plate portion 162 and provide a locating tab to properly align the pretensioner 20 to the mounting surface.

The present invention provides a pretensioner 20 with thermal - resistance to extreme temperatures that occur during a fire, either during transportation of the pretensioner 20 to the vehicle assembly plant or in the motor vehicle itself. This protection is accomplished by steel tubes 22, 50 in contrast to traditional zinc die-cast components that, as used in the prior art, house a pyrotechnic device 40. The pyrotechnic device when subjected to extreme heat or a heat source, such as a flame, can begin to soften and melt prior to the auto-ignition of a gas generating composition, causing molten metal to be projected from the device. The glass transition temperature of the steel tubes 22, 50 used in the present invention, which houses the pyrotechnic device 40, is several times higher than that of the zinc die-cast, reducing the potential of injury to either the vehicle occupant or the emergency personnel.

An additional aspect of this pretensioner is to provide staggered and measured energy management of the seat belt buckle's acceleration and deceleration during and following pretensioning. Excessive acceleration has been demonstrated to damage internal components of the seat belt buckle 84, requiring several countermeasures to be used to mitigate these effects. With the present invention the first deceleration feature is a ferrule 130 that contacts the tapered section of a straight tube 22, deforming the straight tube slightly and absorbing energy.

This invention further provides a more effective cable transition path. Most conventional pretensioners include a pulley or cast cable channel that acts as a direction-changing element. When a cable is pulled about these devices, the cable exhibits increased friction levels that affect pretensioner performance and reduce efficiency. The use of a hardened material to provide the cable path as opposed to a softer material, such as a zinc casting, is that the cable, which is for example a twisted wire rope, will no longer dig into the softer supporting material. The cable path in a pretensioner of the present invention is provided by a curved tube 50 of sufficiently large diameter to overcome the deficiencies of the prior art.

## Claims

1. A seat belt pretensioner (20) comprising: a straight tube (22) having a cylindrical wall (22b), a first end (24) and a second end (26), at least one of the first end or the second end being open (32), the straight tube (22) includes an opening (38) in the wall (22b) that receives a curved tube (50), the curved tube (50) having a first region (52); a second region portion (58) and a curved central segment (54), the second region (58) has a center that is collinear with a central axis (64) of the straight tube (22) extending through the center of the straight tube (22) and an axis extending through the center of the first region is arranged at an acute angle relative to the central axis (64) of the straight tube (22); a pyrotechnic device (40) is located in the straight tube (22) to provide products of combustion to drive a piston (100) along the interior of the straight tube (22), the motion of the piston (100) moving a cable (80) in a direction to move a seat belt buckle (84) to reduce belt stack about a vehicle occupant, the cable (80) extends through the curved tube (50) and is connected to the piston (100).

2. A seat belt pretensioner (20) according to Claim 1 wherein the curved central segment (54) has an arcuate curvature.

3. A seat belt pretensioner (20) according to either of Claims 1 or 2 wherein the diameter of the curved tube (50) proximate the second region (54) is smaller than the inner diameter of the straight tube (22).

4. A seat belt pretensioner (20) according either of Claims 1 or 2 wherein the pyrotechnic device (40) is received in the second end (26) of the straight tube (22).

5. A seat belt pretensioner (20) according to any of Claims 1 until 4 wherein the pyrotechnic device (40) includes an exit opening (45) centrally disposed within the straight tube (22) and wherein the exit opening is located adjacent to and upstream of the second region (58) of the curved tube (50).

6. A seat belt pretensioner (20) according to any of claims 1 until 5 wherein the piston (100) be driven down the straight tube (22) by products of combustion generated by the pyrotechnic device and the wire cable (80) is received through the curved tube (50) and one end of the cable is connected to the seat belt a second end (86) of the cable is connected to the piston (100).

7. A seat belt pretensioner (20) according to Claim 6 including a ferrule (130) linked to the second end (86) of the cable, the ferrule (130) moved by the piston (100).

8. A seat belt pretensioner (20) according to any of Claims 1 until 7 including a one-way locking mechanism configured to enable the piston (100) to be urged in one direction (132) down the straight tube (22) and configured to prevent or resist motion of the piston in an opposite direction.

9. A seat belt pretensioner (20) according to any of Claims 1 until 8 wherein the piston (100) is located in an abutting relation with the end of the second region (58) of the curved tube (50).

## Patentansprüche

1. Sicherheitsgurtstraffer (20), der ein gerades Rohr (22) mit einer zylindrischen Wand (22b), einem ersten Ende (24) und einem zweiten Ende (26) aufweist, wobei mindestens eines von erstem Ende oder zweitem Ende offen ist (32), wobei das gerade Rohr (22) eine Öffnung (38) in der Wand (22b) umfasst, die ein gebogenes Rohr (50) aufnimmt, wobei das gebogene Rohr (50) einen ersten Bereich (52), einen zweiten Bereichsabschnitt (58) und ein gebogenes mittleres Segment (54) aufweist, wobei der zweite Bereich (58) eine Mitte aufweist, die mit einer Mittelachse (64) des geraden Rohres (22) kollinear ist, die sich durch die Mitte des geraden Rohres (22) erstreckt, und wobei eine Achse, die sich durch die Mitte des ersten Bereiches erstreckt, unter einem spitzen Winkel relativ zur Mittelachse (64) des geraden Rohres (22) angeordnet ist; wobei eine pyrotechnische Vorrichtung (40) im geraden Rohr (22) angeordnet ist, um Verbrennungsprodukte zu liefern, um einen Kolben (100) längs des Inneren des geraden Rohres (22) anzutreiben, wobei die Bewegung des Kolbens (100) ein Seil (80) in einer Richtung bewegt, um ein Sicherheitsgurtschloss (84) zu bewegen, um den Gurtdurchhang um einen Fahrzeuginsassen zu verringern, wobei sich das Seil (80) durch das gebogene Rohr (50) erstreckt und mit dem Kolben (100) verbunden ist.

2. Sicherheitsgurtstraffer (20) nach Anspruch 1, bei dem das gebogene mittlere Segment (54) eine bogenförmige Krümmung aufweist.

3. Sicherheitsgurtstraffer (20) nach entweder Anspruch 1 oder 2, bei dem der Durchmesser des gebogenen Rohres (50) in der Nähe des zweiten Bereiches (58) kleiner ist als der Innendurchmesser des geraden Rohres (22).

4. Sicherheitsgurtstraffer (20) nach entweder Anspruch 1 oder 2, bei dem die pyrotechnische Vorrichtung (40) im zweiten Ende (26) des geraden Rohres (22) aufgenommen wird.

5. Sicherheitsgurtstraffer (20) nach einem der Ansprüche 1 bis 4, bei dem die pyrotechnische Vorrichtung (40) eine Austrittsöffnung (45) umfasst, die mittig innerhalb des geraden Rohres (22) angeordnet ist, und bei dem die Austrittsöffnung benachbart zum und oberhalb des zweiten Bereiches (58) des gebogenen Rohres (50) angeordnet ist.

6. Sicherheitsgurtstraffer (20) nach einem der Ansprüche 1 bis 5, bei dem der Kolben (100) durch die von der pyrotechnischen Vorrichtung erzeugten Verbrennungsprodukte im geraden Rohr (22) nach unten getrieben wird und das Drahtseil (80) durch das gebogene Rohr (50) aufgenommen wird, und wobei ein Ende des Seils mit dem Sicherheitsgurt verbunden ist, ein zweites Ende (86) des Seils mit dem Kolben (100) verbunden ist.

7. Sicherheitsgurtstraffer (20) nach Anspruch 6, der eine Quetschhülse (130) umfasst, die mit dem zweiten Ende (86) des Seils verbunden ist, wobei die Quetschhülse (130) durch den Kolben (100) bewegt wird.

8. Sicherheitsgurtstraffer (20) nach einem der Ansprüche 1 bis 7, der einen Einwegsperrmechanismus umfasst, der ausgebildet ist, damit der Kolben (100) in einer Richtung (132) nach unten im geraden Rohr (22) getrieben werden kann, und der ausgebildet ist, um die Bewegung des Kolbens in einer entgegengesetzten Richtung zu verhindern oder ihr einen Widerstand entgegenzusetzen.

9. Sicherheitsgurtstraffer (20) nach einem der Ansprüche 1 bis 8, bei dem der Kolben (100) in einer anstoßenden Beziehung mit dem Ende des zweiten Bereiches (58) des gebogenen Rohres (50) angeordnet ist.

## Revendications

1. Dispositif de prétension d'une ceinture de sécurité (20), comprenant: un tube droit (22) comportant une paroi cylindrique (22b), une première extrémité (24) et une deuxième extrémité (26), au moins une extrémité, la première extrémité ou la deuxième extrémité, étant ouverte (32), le tube droit (22) englobant une ouverture (38) dans la paroi (22b) recevant un tube courbé (50), le tube courbé (50) comportant une première région (52); une partie de deuxième région (58) et un segment central courbé (54), la deuxième région (58) comportant un centre colinéaire à un axe central (64) du tube droit (22), s'étendant à travers le centre du tube droit (22), un axe s'étendant à travers le centre de la première région étant agencé à un angle aigu par rapport à l'axe central (64) du tube droit (22); un dispositif pyrotechnique (40) étant agencé dans le tube droit (22) pour fournir des produits de combustion afin d'entraîner un piston (100) le long de l'intérieur du tube droit (22), le déplacement du piston (100) entraînant le déplacement d'un câble (80) dans une direction, en vue de déplacer une boucle de la ceinture de sécurité (84), afin de réduire le relâchement de la ceinture autour d'un occupant du véhicule, le câble (80) s'étendant à travers le tube courbé (50) et étant connecté au piston (100).

2. Dispositif de prétension d'une ceinture de sécurité (20) selon la revendication 1, dans lequel le segment central courbé (54) a une courbure arquée.

3. Dispositif de prétension d'une ceinture de sécurité (20) selon les revendications 1 ou 2, dans lequel le diamètre du tube courbé (50) près de la deuxième région (58) est inférieur au diamètre intérieur du tube droit (22).

4. Dispositif de prétension d'une ceinture de sécurité (20) selon les revendications 1 ou 2, dans lequel le dispositif pyrotechnique (40) est reçu dans la deuxième extrémité (26) du tube droit (22).

5. Dispositif de prétension d'une ceinture de sécurité (20) selon l'une quelconque des revendications 1 à 4, dans lequel le dispositif pyrotechnique (40) englobe une ouverture de sortie (45), agencée de manière centrale dans le tube droit (22), l'ouverture de sortie étant agencée près de la deuxième région (58) du tube courbé (50) et en amont de celle-ci.

6. Dispositif de prétension d'une ceinture de sécurité (20) selon l'une quelconque des revendications 1 à 5, dans lequel le piston (100) est entraîné vers le bas le long du tube droit (22) par des produits de combustion produits par le dispositif pyrotechnique, le câble métallique (80) étant reçu à travers le tube courbé (50), une extrémité du câble étant connectée à la ceinture de sécurité et une deuxième extrémité (88) du câble étant connectée au piston (100).

7. Dispositif de prétension d'une ceinture de sécurité (20) selon la revendication 6, englobant une virole (130) reliée à la deuxième extrémité (86) du câble, la virole (130) étant déplacée par le piston (100).

8. Dispositif de prétension d'une ceinture de sécurité (20) selon l'une quelconque des revendications 1 à 7, englobant un mécanisme de verrouillage unidirectionnel, configuré de sorte à permettre la poussée du piston (100) vers le bas dans une direction (132), le long du tube droit (22), et configuré de sorte à empêcher le déplacement du piston dans une direction opposée ou à résister à un tel déplacement.

9. Dispositif de prétension d'une ceinture de sécurité (20) selon l'une quelconque des revendications 1 à 8, dans lequel le piston (100) est agencé dans une relation à butée par rapport à l'extrémité de la deuxième région (58) du tube courbé (50).
